# EUROPEAN PATENT APPLICATION

(11) **EP 1 655 363 A1**
(43) Date of publication of application: **10.05.2006**
(21) Application number: 04746036.5
(22) Date of filing: 17.06.2004
(51) Int. Cl.: C12M 1/34, G01N 37/00, G01N 35/08

(54) **CELL MICROCHIP**

(30) Priority: 20.06.2003 JP 2003176365
(71) Applicant: NITTO DENKO CORPORATION, Ibaraki-shi, Osaka 567-8680 (JP)
(72) Inventor: AWAZU, Kunio, 6691132 (JP); MAENO, Emi, Mino-shi, Osaka 562-0031 (JP); ODA, Noriko, Suite-shi, Osaka 565-0821 (JP); SAWA, Yoshiki, Hyogo 662-0099 (JP); UMEHARA, Toshiyuki, c/o NITTO DENKO CORPORATION, Ibaraki-shi, Osaka 567-8680 (JP); HINO, Atsushi, c/o NITTO DENKO CORPORATION, Ibaraki-shi, Osaka 567-8680 (JP); AKADA, Yuuzou, c/o NITTO DENKO CORPORATION, Ibaraki-shi, Osaka; 567-8680 (JP); FUKUSHIMA, Yasuhiro, c/o NITTO DENKO CORPORATION, Ibaraki-shi, Osaka 567-8680 (JP); KITAURA, Chieko, c/o NITTO DENKO CORPORATION, Ibaraki-shi, Osaka 567-8680 (JP)
(74) Representative: Vossius & Partner
(86) International application number: PCT/JP2004/008521
(87) International publication number: WO 2004/113491

(57) **Abstract**

A cell microchip with which various measurements of the action of medicaments, etc. by the use of biological reaction using a small amount of cells can be accomplished simply within a brief period of time; and a method of assay with the use of the cell microchip. In particular, there are provided a cell microchip comprising plastic substrate (31) and, formed thereon, micro flow channel (32); a method of assay with the use of cells **characterized in that** use is made of the cell microchip; and a method of conducting biological inspection with the use of cells **characterized in that** use is made of the cell microchip.

## Description

### TECHNICAL FIELD

The present invention relates to a cell microchip having a micro flow channel, particularly a micro flow channel having a branched channel, and a measurement method using the cell microchip.

### BACKGROUND ART

As a method of examining the action of a chemical by using cells, there has been conducted a method that involves inoculating a suitable amount of cells onto a plate-shaped incubator consisting of glass and plastics, then culturing the cells, adding a chemical-containing solution thereto and judging whether the cells are dead or alive. This is a method wherein the number of cells, the amount of a medium and the amount of reagents which should be prepared beforehand are so great that they considerably occupy a space in the incubator for cell culture. Particularly when rare cells or reagents are used, an assay itself is difficult. When all cells are observed or measured, a considerable time is required for the assay and judgment.

On the other hand, a large number of products have been developed in recent years as DNA microchips and protein microchips wherein a large number of nucleic acids such as DNAs and proteins such as antibodies are aligned on a substrate, reacted and analyzed in a very small amount (see, for example, Japanese Patent Application National Publication Nos. 6-504997 and 2002-542487), but there is not known any art of analyzing cells themselves on a microship.

### DISCLOSURE OF INVENTION

An object of the present invention is to provide a cell microchip wherein various assays of the action of a chemical, etc. can be carried out easily in a short time by utilizing biological reaction using a small amount of cells, as well as a measurement method using the same.

To solve the problem described above, the present inventors made extensive study and found that the following cell microchip can be used to achieve the object described above, to arrive at the present invention.

That is, the present invention relates to a cell microchip comprising a plastic substrate which a micro flow channel is formed thereon. The cross-section of the micro flow channel is preferably rectangular, triangular, circular, oval or a cross-sectional shape thereof. The long or short side or the diameter of the cross-section of the micro flow channel is preferably 2 to 200 µm.

In the cell microchip of the present invention, the micro flow channel preferably has one or more junctions. The junction is preferably a 3-pronged junction composed of a flow channel (A), a flow channel (B) and a flow channel (C).

In the cell microchip of the present invention, the micro flow channel preferably constitutes one measurement system using cells, and multiple measurement systems are preferably formed on the plastic substrate.

In the cell microchip of the present invention, the plastic substrate is preferably formed from an epoxy resin. The cell microchip of the present invention preferably has a haze value of 10% or less. The cell microchip of the present invention preferably has a light transmittance of 88% or more.

The present invention is relates to a method of measurement using cells, which comprises using the cell microchip of the present invention.

The present invention relates to a biological assay method, which comprises using the cell microchip of the present invention.

The present invention relates to a method of assaying the action of a chemical on cells by using a cell microchip wherein a flow channel (A), a flow channel (B), a flow channel (C) into which the flow channels (A) and (B) are merged, and a micro flow channel having a 3-pronged junction composed of the three flow channels are formed on a plastic substrate, which comprises filling one of the flow channels (A) and (B) with a medium to allow cells to grow or live therein, and injecting a chemical-containing solution into the other to contact the chemical with the cells, wherein the flow channel (C) is a passage of the medium or solution or a zone for assaying the action of the chemical.

In the method of assaying the action of a chemical, the contact of the cells with the chemical is preferably carried out at the 3-pronged junction.

In the method of assaying the action of a chemical, the cells, starting from one or more cells, preferably grow or live linearly in a single layer in the flow channel (A) or (B) that is a flow channel for proliferating or surviving the cells.

In the method of assaying the action of a chemical, the action of a chemical on cells is preferably examined more than once by using a cell microchip having multiple micro flow channels formed on the plastic substrate.

According to the cell microchip of the present invention, various assays of the action of a chemical, etc. can be carried out easily in a short time by utilizing biological reaction using a small amount of cells in a micro flow channel formed on a plastic substrate. According to the present invention, there can be provided a cell microchip having a micro flow channel having a varying shape and size depending on the object. When the long or short side or the diameter of the cross-section of the micro flow channel is regulated in the range of 2 to 200 µm depending on the size of a cell used, the cell can be proliferated or survived linearly, and first the biological reaction of a cell positioned at the front can be measured. When the micro flow channel has one or more junctions, the site of the reaction and assay can be set up in the vicinity of the junctions. The labor and time required for the assay or for judging assay results can thereby be reduced. Such effect is more effective when the junction is a 3-pronged junction composed of a flow channel (A), a flow channel (B) and a flow channel (C).

When the cell microchip of the present invention constitutes one measurement system using cells, and when multiple measurement systems are formed on the 1 plastic substrate described above, a large number of biological reactions and assays can be carried out simultaneously on the 1 microchip, thus further reducing the labor and time required for the assay or for judging assay results. Further, the space for culturing the cells can be reduced and the incubator can be utilized effectively with the reduced space.

When the plastic substrate is formed from an epoxy resin, the cell microchip of the present invention is excellent particularly in affinity for cells, and the cells can be proliferated or survived well even in a minute space, so the cell microchip is particularly advantageous in assays using the biological reaction of cells. When the cells are observed under a microscope, the substrate comprising epoxy resin is superior by virtue of properties such as excellent transparency and small phase difference. When the cell microchip of the present invention has a haze value of 10% or less and/or a light transmittance of 88% or more, the cell microchip is excellent in transparency and suitable for observation of cells under a microscope or for spectrometric measurement.

According to the measurement method or biological assay method using cells in the present invention, there can be provided various measurement methods or assay methods which can be carried out easily in a short time in a reduced space by using the cell microchip described above.

According to the method of assaying the action of a chemical on cells in the present invention, there can be provided an assay method which can be carried out easily in a short time in a reduced space by using the cell microchip on which a micro flow channel having a 3-pronged junction is formed, wherein the action of a chemical can be assayed in the junction or in the assay flow channel. When the cell microchip having multiple micro flow channels formed on the plastic substrate is used, a large number and/or many kinds of assays can be achieved all at once. When the assay method of the present invention is used in screening of medicines etc., a high-throughput assay using cells is feasible to promote development of pharmaceutical preparations.

### Brief Description of Drawings

Fig. 1 is a schematic view showing one embodiment of the cell microchip of the present invention.
Fig. 2 is a schematic view showing another embodiment of the cell microchip of the present invention.
Fig. 3 is a graph showing light transmittances of the cell microchip of the present invention.
Fig. 4 is a schematic view showing still another embodiment of the cell microchip of the present invention.

Numbers in the drawings are meant as follows: 1, plastic substrate; 2, micro flow channel; 3, flow channel (A); 4, flow channel (B); 5, flow channel (C); 6, 3-pronged junction; 7, 3-pronged junction; 8, 3-pronged junction; 10, cell microchip; 20, cell microchip; 30, cell microchip; 31, plastic substrate; 32, micro flow channel; 33, flow channel (A); 34, flow channel (B); 35, flow channel (C); 36, 3-pronged junction; and 37, fluid reservoir.

### Best Mode for Carrying Out the Invention

The cell microchip of the present invention comprises a plastic substrate which a micro flow channel is formed thereon.

The micro flow channel in the present invention is a groove having a width and depth of micrometer scale formed on a plastic substrate, which is a channel wherein cells are present and a fluid is passed or retained. The micro flow channel encompasses not only one micro flow channel but also a combination of individual micro flow channels (also referred to simply as flow channels).

The shape of the micro flow channel is not particularly limited insofar as the micro flow channel is in such a shape as to pass or retain a fluid. From the viewpoint of ease with which the plastic substrate is fabricated and for a shape suitable for survival of cells, a cross-section of the micro flow channel is preferably rectangular, triangular, circular, oval or a cross-sectional shape thereof. Specific shapes include a rectangular shape, V shape, semicircular shape and U shape.

The size of the cross-section of the micro flow channel can be determined suitably depending on the object of the present invention, particularly the size of a cell used and the shape of the cross-section. When the cross-section is rectangular, triangular or a cross-sectional shape thereof, the long or short side is usually 1 to 1000 µm, preferably 2 to 200 µm, still more preferably 10 to 100 µm, further more preferably 10 to 50 µm. When the cross-section is circular, oval or a cross-sectional shape thereof, the diameter is usually 1 to 1000 µm, preferably 2 to 200 µm, still more preferably 10 to 100 µm, further more preferably 10 to 50 µm. The diameter is calculated assuming that the shape is circular or oval, and when the shape is oval, the diameter refers to major and minor axes.

The length of each flow channel of the micro flow channel is not particularly limited, and can be arbitrarily established depending on the object of the present invention and the size of the plastic substrate on which it is formed, and usually the length of each flow channel is about 0.01 mm to 10 cm. When the length is in this range, the cell microchip is easily handled and can be used preferably to various assays.

The start point and/or end point of the flow channel is the end of the plastic substrate or an arbitrary point on the substrate, and is not particularly limited. When the start or end point is in the end of the substrate, the start or end point may be opened in the end or may be closed at a position inside, suitably apart from the end of the substrate. When the start or end point of the flow channel is inside of the substrate, a reservoir for trapping a liquid may be arranged in the start or end point.

Because the micro flow channel may be a combination of multiple flow channels, the micro flow channel preferably has one or more junctions at which the flow channel are crossed so that the individual flow channels are connected to one another. The number of junctions is not particularly limited insofar as the number is one or more so as to be adapted to the measurement method of the present invention described below; for example, the number of junctions is 2 to 100, preferably 2 to 50, more preferably 2 to 10. The number of flow channels branching from one junction is exemplified by 2 to 1000, preferably 2 to 500, more preferably 2 to 100. The junctions may be distributed in any way in a combination of micro flow channels, and the state of junctions distributed is not particularly limited and may be a state of junctions distributed regularly or irregularly at suitable intervals in one flow channel or a state of junctions distributed regularly or irregularly in multiple flow channels.

The micro flow channel may be a large number of wells each retaining one cell on the plastic substrate. Such cell microchip can effect either many kinds of assays using one cell all at once or assays many times simultaneously.

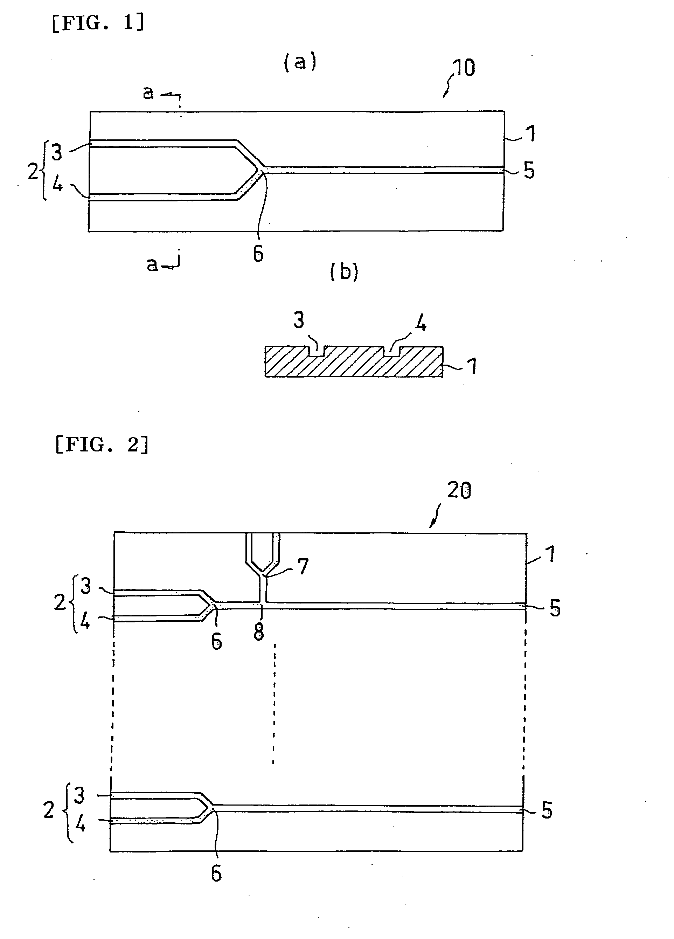

The cell microchip used preferably in the assay method of the present invention described below is illustrated for example in Fig. 1 or 2. In Fig. 1, a cell microchip 10 has a micro flow channel 2 formed on a plastic substrate 1. The micro flow channel 2 is composed of a flow channel (A) 3, flow channel (B) 4, and flow channel (C) 5, and has a 3-pronged junction 6 at which the three flow channels are crossed. The start and end points of the flow channel can be arbitrarily established, and in Fig. 1, the start points of the flow channels (A) and (B) are in the end of the plastic substrate. With this constitution given, a cell-containing sample and a chemical-containing solution can be injected into the side of the cell microchip 10.

In Fig. 1, the micro flow channel 2 composed of the flow channel (A) 3, the flow channel (B) 4, the flow channel (C) 5 and the 3-pronged junction 6 constitutes one measurement system upon injection of a cell-containing sample for example into the flow channel (B) 4. Preferably, multiple measurement systems are formed on one plastic substrate in order to carry out multiple assays efficiently at the same time. The number of measurement systems can be suitably determined depending on the size of the cell microchip and the fabricating techniques of the micro flow channel. Such a cell microchip is illustrated in Fig. 2.

In Fig. 2, micro flow channels are formed in parallel. A part of the measurement system is constituted to have other junctions 7 and 8. With this constitution given, a plurality of chemicals can be injected separately sequentially to examine the interaction of the chemicals.

Now, the method of manufacturing the cell microchip of the present invention is described.

The resin forming the plastic substrate constituting the cell microchip of the present invention preferably uses a thermoplastic resin or thermosetting resin. The thermoplastic resin includes polycarbonate, polyacrylate, polyether sulfone, polysulfone, polyester, polymethyl methacrylate, polyether imide and polyamide, and the thermosetting resin includes epoxy resin, unsaturated polyester, polydiallyl phthalate and polyisobornyl methacrylate. These resins can be used singly or in combination thereof, and can be used as a copolymer or mixture thereof with other components.

In the present invention, epoxy resin is particularly preferably used because it is excellent in transparency with less phase difference and also excellent in heat resistance and chemical resistance. In the present invention, the state of cells present on the cell microchip is observed directly with a microscope etc., and thus the plastic substrate is required to be excellent in transparency with less phase difference. The cell microchip of the present invention requires heat resistance to its limit because it is heated in some cases during cell culture or during various assays. Since various liquid are passed thorough the micro flow channel, the cell microchip requires chemical resistance to its limit. The epoxy resin is excellent in affinity not only for cells but also for proteins or nucleic acids, and is thus particularly preferable as a material of the cell microchip.

The epoxy resin includes, for example, resins based on bisphenol such as bisphenol A, bisphenol F, bisphenol S and their water additions, resins based on novolak such as phenol novolak and cresol novolak, nitrogen-containing ring resins such as triglycidyl isocyanate and hydantoin, alicyclic and aliphatic resins, aromatic resins such as naphthalene, resins based on glycidyl ether, low water absorption type resins such as biphenyl resin, dicyclo resins, ester resins and ether ester resins, and modified resins thereof. These resins may be used alone or in combination. Among the various epoxy resins described above, bisphenol A epoxy resin, alicyclic epoxy resin and triglycidyl isocyanurate resin are preferably used for prevention of discoloration.

As the epoxy resin, a resin having an epoxy equivalent of 100 to 1000 and a softening point of 120°C or less is preferably used from the viewpoint of physical properties of the resulting resin substrate, such as flexibility and strength. To obtain an epoxy resin-containing solution excellent in coating properties and spreading into a sheet, a two-part liquid epoxy resin showing a liquid state at a temperature lower than in coating, particularly at ordinary temperature, is preferably used.

The epoxy resin can be contained a curing agent, a curing accelerator and if necessary with conventionally known various additives such as an antioxidant, a denaturant, a surfactant, a dye, a pigment, a discoloration inhibitor, a UV absorber and an organic filler.

The curing agent is not particularly limited, and one or more curing agents suitable for the epoxy resin can be used. Examples of the curing agent include organic acid compounds such as tetrahydrophthalic acid, methyl tetrahydrophthalic acid, hexahydrophthalic acid and methyl hexahydrophthalic acid, and amine compounds such as ethylene diamine, propylene diamine, diethylene triamine and triethylene tetramine, amine adducts thereof, methaphenylene diamine, diaminodiphenyl methane and diaminodiphenyl sulfone.

Other examples of the curing agent include amide compounds such as dicyan diamide and polyamide, hydrazide compounds such as dihydrazide, and imidazole compounds such as methyl imidazole, 2-ethyl-4-methyl imidazole, ethyl imidazole, isopropyl imidazole, 2,4-dimethyl imidazole, phenyl imidazole, undecyl imidazole, heptadecyl imidazole, and 2-phenyl-4-methyl imidazole.

Further examples of the curing agent include imidazoline compounds such as methyl imidazoline, 2-ethyl-4-methyl imidazoline, ethyl imidazoline, isopropyl imidazoline, 2,4-dimethyl imidazoline, phenyl imidazoline, undecyl imidazoline, heptadecyl imidazoline, and 2-phenyl-4-methyl imidazoline, as well as phenol compounds, urea compounds and polysulfide compounds.

Additional examples of the curing agent include acid anhydrides, and such acid anhydride curing agents can be preferably used from the viewpoint of prevention of discoloration. Examples thereof include phthalic anhydride, maleic anhydride, trimellitic anhydride, pyromellitic anhydride, nadic anhydride, glutaric anhydride, tetrahydrophthalic anhydride, methyl tetrahydrophthalic anhydride, hexahydrophthalic anhydride, methyl hexahydrophthalic anhydride, methyl nadic anhydride, dodecenyl succinic anhydride, dichlorosuccinic anhydride, benzophenone tetracarboxylic anhydride, chlorenedic anhydride.

Particularly, it is preferable to use an acid anhydride-based curing agent having a molecular weight of about 140 to about 200 and being colorless or pale yellow, such as phthalic anhydride, tetrahydrophthalic anhydride, hexahydrophthalic anhydride, or methyl hexahydrophthalic anhydride.

When an acid anhydride-based curing agent is used as the curing agent, the compounding ratio of the epoxy resin to the curing agent is determined such that the amount of the acid anhydride incorporated is preferably 0.5 to 1.5 equivalents, more preferably 0.7 to 1.2 equivalents, per equivalent of epoxy group in the epoxy resin. When the acid anhydride is less than 0.5 equivalent, hue after curing is deteriorated, while when the acid anhydride is higher than 1.5 equivalents, humidity resistance tends to be decreased. When other curing agents are used singly or as a mixture of two or more thereof, the amount of the curing agents can be in accordance with the equivalent ratio described above.

The curing accelerator includes tertiary amines, imidazoles, quaternary ammonium salts, organic metal salts, phosphorus compounds, urea compounds etc., and particularly tertiary amines and imidazoles are preferably used. These can be used alone or in combination.

The amount of the curing accelerator compounded is preferably 0.05 to 7.0 parts by weight, more preferably 0.2 to 3.0 parts by weight, based on 100 parts by weight of epoxy resin. When the amount of the curing accelerator compounded is less than 0.05 part by weight, a sufficient curing acceleration effect cannot be achieved, while when the amount is higher than 7.0 parts by weight, the resulting cured product may be discolored.

The antioxidant includes conventionally known antioxidants such as phenol compounds, amine compounds, organic sulfur compounds and phosphine compounds.

The denaturant includes conventionally known denaturants such as glycols, silicones and alcohols.

When an epoxy resin sheet is formed by casting etc. while the epoxy resin is contacted with air, the surfactant is added to smooth the surface of the sheet. The surfactant includes surfactants based on silicone, acrylate, fluorine etc., and particularly the silicone-based surfactant is preferable.

The plastic substrate may be formed from a composite layer, and a hard coat layer comprising urethane resin, acrylic resin, silicone resin or the like may be formed on the epoxy resin sheet. Among the hard coat layer-forming resins, the urethane resin is preferable, and urethane acrylate is particularly preferably used.

The plastic substrate in the present invention can be formed by conventionally known methods such as casting, cast molding etc.

In the cast molding method, a hard coat layer-forming resin solution is applied onto a flat mold and then cured by irradiation with UV rays or by heating. Thereafter, the flat mold is arranged oppose to another flat mold subjected to release treatment such that the hard coat layer and the release-treated surface are directed inside, and the gap between the two molds is fixed with a spacer or the like. Thereafter, a plastic substrate-forming resin solution is cast into the gap between the two flat molds and then cured by heating or the like. Thereafter, the two molds are opened whereby a plastic substrate having the hard coat layer formed thereon can be obtained.

In the casting method, a support consisting of an endless belt is allowed to run at a constant rate of for example 0.1 to 50 m/min., preferably 0.2 to 5 m/min., via a driving drum and a follower drum, while a hard coat layer-forming resin solution is applied via a die and then cured by irradiation with UV rays or by heating, and a plastic substrate-forming resin solution is applied via a die and then cured by heating or the like. Then, a plastic substrate having a hard coat layer formed thereon can be obtained by releasing it from the endless belt.

When the plastic substrate is a 2-layer structure comprising an epoxy resin sheet and a hard coat layer, the micro flow channel may be formed either on the epoxy resin sheet or on the hard coat layer, which can be selected depending on cells to be cultured.

When the plastic substrate is a 2-layer structure comprising an epoxy resin sheet and a hard coat layer, the surface roughness of the epoxy resin sheet is preferably 0.1 to 5 nm, more preferably 0.1 to 3 nm, still more preferably 0.1 to 2 nm. The surface roughness of the hard coat layer is preferably 5 to 100 nm, more preferably 7 to 80 nm, still more preferably 10 to 50 nm.

The thickness of the cell microchip of the present invention is preferably 100 to 800 µm, more preferably 200 to 600 µm, still more preferably 200 to 400 µm. When the hard coat layer is formed, the thickness of the hard coat layer is preferably 1 to 10 µm. When the thickness of the hard coat layer is less than 1 µm, sufficient functions of the hard coat cannot be given, while when the thickness is greater than 10 µm, cracking easily occurs.

From the viewpoint of easier observation of cells under a microscope or the like, the haze value of the cell microchip of the present invention is preferably 10% or less, more preferably 3% or less, still more preferably 0 to 2%. The haze value is a value determined according to JIS K 7136, and can be determined by using a Haze Meter, for example MH-150 manufactured by Murakami Color Research Laboratory Co., Ltd.

From the viewpoint of easier observation of cells under a microscope or the like, the light transmittance of the cell microchip of the present invention is preferably 88% or more, more preferably 90% or more, still more preferably 92 to 100%. The light transmittance is a value determined according to JIS K 7361-1, and can be obtained by measuring light transmittance at 550 nm with a high-performance spectrophotometer, for example DOC-3C manufactured by Murakami Color Research Laboratory Co., Ltd.

Then, a micro flow channel is formed on the plastic substrate. The method of forming the micro flow channel includes the following fabricating methods using the lasers described below.

### 1. Direct fabricating method

### (1) Direct etching by laser ablation

This is a method of forming a groove by direct etching by ablation with beam scanning or imaging with a laser beam. Ablation by absorption of UV rays, that is, a non-heating process not involving heating process, is used preferably to prevent the deterioration of the edge and wall surface, reduction in accuracy, and deterioration in outward appearance, caused by thermal damage upon heating.

The laser used include an Er-YAG laser, Nd-YAG laser, Nd-YVO₄ laser, Nd-YLF laser, carbon dioxide gas laser, excimer laser, semiconductor laser, titanium-sapphire laser, copper vapor laser, free electron laser, Ar ion laser, Kr ion laser, and ultra-short pulse laser using infrared vibration excitation etc., and a laser capable of ablation by ultraviolet absorption at 400 nm or less, for example an ArF excimer laser at an oscillation wavelength of 193 nm, a KrF excimer laser at 248 nm, a XeCl excimer laser at 308 nm, lasers having third high frequency, such as an Nd-YAG laser at 355 nm, fourth high frequency, and third and fourth high frequency, such as an Nd-YVO₄ laser having fourth high frequency at 266 nm, or a laser having a wavelength of 400 nm or more, can also absorb lights in the UV range via a multiphoton absorption process, and an ultra-short pulse laser etc. having a pulse width of 1×10⁻¹¹ second or less, represented by a titanium sapphire laser at a wavelength in the range of 750 to 850 nm, are particularly preferable.

A specific fabricating method is for example as follows:
(i) A workpiece material is fabricated by ablation by irradiation with a laser light consisting of a beam adjusted to mask imaging or to the width of a groove formed by a beam homogenizer optical system or by a diffraction optical element, while a groove is fabricated by transferring the position of laser irradiation along a predetermined fabricating line.
(ii) By a mask imaging method, a whole image is fabricated directly on the workpiece material by ablation via a mask designed so as to be adapted to a fabricating shape.

### (2) Dry etching by a vacuum process

A resist layer or a metal thin film layer is formed on a workpiece material, and the resist layer or the metal thin film layer is fabricated by usual photolithography to form a fabricating pattern. With this pattern-forming layer as a mask, a groove is formed by etching with a vacuum apparatus such as vacuum plasma, atmospheric pressure plasma, reactive ion etching etc.

### (3) Method using a wet process

A resist layer or a metal thin film layer is formed on a workpiece material, and the resist layer or the metal thin film layer is fabricated by usual photolithography to form a fabricating pattern. With this pattern-forming layer as a mask, a groove is formed by etching with an alkali, an acid or an organic solvent capable of dissolving the material to be processed. When a photosensitive resin is used, a groove can be formed by known photolithography.

### 2. Transfer method

By any of the methods (1), (2) and (3) in the above-mentioned 1, a desired shape is formed and used as a template to form a mold by electroforming.

Electroforming involves vapor decomposition or electroless plating to form a metal thin film layer on the surface of a template, then subjecting it to electroplating with a metal such as Ni or Cu to apply the metal thereon and then releasing the layer from the template. The metal mold thus obtained is transferred onto a plastic material by pressing, stamping, cast molding or extrusion molding.

In this method, a material easily fabricated by any of the methods (1), (2) and (3) in the above-mentioned 1 may be selected as the first template. The transfer method is advantageous in that mass production is easily carried out once a mold is produced. On the other hand, the material of a product should be a material capable of stamping, cast molding etc.

When a micro flow channel is to be fabricated by a laser, the width and length of the flow channel can be established by designing a desired shape in the mask. The depth of the flow channel or the shape of its cross-section can be established by suitably regulating the quantity of a laser to be applied.

When the micro flow channel is to be fabricated, laser absorption can be increased by incorporation of an UV absorber or organic filler into the resin constituting the plastic substrate.

After fabricating, a surface protective sheet is preferably stuck on the cell microchip just before use in order to protect the surface of the resin.

The surface protective sheet usable in the present invention includes, but is not limited to, surface protective sheets described in Japanese Patent Nos. 3511386, 3290261, 2934398 and 2983449.

The cell microchip of the present invention with its top surface covered with a plastic cap can be used to prevent evaporation of a fluid in the micro flow channel. This cap has such a shape and area as to cover at least the whole of the micro flow channel, and the thickness thereof may be about 30 to 400 µm. The plastic material used in the cap is the same as in the substrate. Alternatively, when the cell microchips are laid as two or more layers, the upper microchip can be substituted for a cap of the lower microchip.

The thus produced cell microchip of the present invention can be used in a measurement method using cells, and the present invention provides a measurement method using the cell microchip.

Further, the present invention provides a biological assay method using cells, which comprises using the cell microchip.

The cells used in the present invention are not particularly limited. The cells include bacteria, fungi (including yeast), plant cells and animal cells, and also include protozoa insofar as they are adapted to the size of the micro flow channel. Particularly, animal cells applied widely to various measurement methods are preferably used. The animal cells include cells isolated from various animal tissues, sub-cultured cells, established cells, germ cells (ovum and sperm), embryonic stem cells, somatic stem cells and nerve cells. For use in a method for diagnosing, preventing or treating human diseases, human-derived cells are preferable, and examples of such cells include cells derived from pathological tissues of a patient with cancer or another disease. When the cells derived from pathological tissues of a patient are used, cells derived from normal tissues of the same person or cells derived from normal tissues of a healthy person are preferably used as the control. These cells may be cells growing or living while adhering to the bottom of the micro flow channel, may be cells growing or living in a floating state, may be undifferentiated cells, or may be differentiated cells. Conventional cells for gene introduction are available from a public depository institution and preferably used. Such cells are exemplified by mouse- or rat-derived cells such as COP, L, C127, Sp2/O, NS-1, NIH3T3, ST2 etc., hamster-derived cells such as BHK, CHO etc., monkey-derived cells such as COS1, COS3, COS7, CV1, Vero etc., human-derived cells such as HeLa, 293 etc., and insect-derived cells such as Sf9, Sf21, High Five etc. In the cell microchip of the present invention, not only cells but also proteins and nucleic acids may be present.

The cells can be cultured in the cell microchip in a medium and an environment suitable for the cells. It is particularly convenient that the plastic substrate is epoxy resin because of high affinity for the cells. By culturing the cells, the cells can be proliferated as a single layer along the micro flow channel.

For example, a method of culturing mammalian cells in the cell microchip involves culturing the cells in a commercial medium supplemented with serum in a cell culture incubator (37°C in 5% CO₂ under humidity). In this case, a cell-containing medium may be injected from the top or side of the start point of the flow channel by using e.g. a micropipette or a micro-syringe in order to introduce the cells into the micro flow channel. The method for exchanging the medium during culture includes a method wherein the medium in the micro flow channel is partially discharged by a micropipette or a micro-syringe and then complimented with a new medium, and a method wherein a medium is passed at a low rate by a micro pump or the like during culture. In the case of an immersion method wherein a culture dish having a size enough to accommodate the microchip therein is filled with a medium and the whole of the microchip is immersed in the medium to culture cells, it is not necessary to exchange the medium with a new medium.

The medium in the present invention includes not only a usual medium used in culturing the cells but also solutions such as a serum-free medium, physiological saline and a phosphate buffer used for temporary storage of cells.

Hereinafter, a method of assaying the action of a chemical on cells by using the cell microchip shown in Fig. 1 is described in detail.

In the method of assaying the action of a chemical on cells by using a cell microchip comprising a plastic substrate 1 provided thereon with a flow channel (A) 3, a flow channel (B) 4, a flow channel (C) **5** into which the flow channel (A) 3 and flow channel (B) 4 are merged, and a micro flow channel 2 having a 3-pronged junction 6 composed of the above 3 flow channels, one of the flow channel (A) 3 or the flow channel (B) 4 is filled with a medium to allow cells to grow or live therein, while a solution containing a chemical is injected into the other to contact the chemical with the cells.

Culture of the cells in the flow channel (A) 3 or flow channel (B) 4 is carried out in the manner described above. The cells used are preferably those which starting from a single cell, grow or live linearly in a single layer in the flow channel. The cells are contacted with the chemical-containing solution injected into the other flow channel. The method of injecting the chemical-containing solution includes, for example, a method of injecting the solution from the top or side of the start point of the flow channel by using a micropipette or a micro-syringe and a method of passing the solution at a low rate with a micro pump or the like. In this case, the chemical-containing solution is preferably a cell culture medium to which a predetermined concentration of a chemical was added. The contact of the chemical with the cells is preferably the contact of the chemical with outermost one cell, and the point of this contact is preferably at the 3-pronged junction 6. The medium and the chemical-containing solution is passed in the direction of the flow channel (C) 5, and finally discharged from the measurement system.

When the cell microchip which formed multiple flow channels as shown in Fig. 2 is used, the action of a chemical on cells can be examined plural times by using one chip, and this cell microchip is preferable in such assays. In this case, the same kind of cells can be used to increase the number of samples (nk number), or the same kind of cells can be used to examine the action of various kinds of chemicals at various concentrations simultaneously, or the action of one kind of chemical on different kinds of cells can be simultaneously examined. When different kinds of cells are used, negative control cells and/or positive control cells are preferably used as the control.

In judging the action of a chemical on cells, for example in examining the chemical resistance of the cells, those cells not resistant to the chemical will terminate their growth in the vicinity of the junction 6. Those cells resistant to the chemical will continue to grow in the flow channel (C) 5 as a proliferating channel.

When growth of the cells is terminated, whether the cells are alive or dead is judged by observation under a microscope. In this case, only one cell contacted with the chemical-containing solution in the vicinity of the junction between the flow channel (A) 3 and flow channel (B) 4 may be observed, thus reducing the time required for judgment.

The present invention is characterized in that the chemical concentration of the chemical-containing solution can be changed to be higher even after the chemical-containing solution is contacted with cells. Specifically, when the chemical-containing solution is to be injected into the flow channel (A) 3, a branch leading to the flow channel (A) 3 is fabricated, and the solution containing a chemical at higher concentration can be injected into the branch to increase the chemical concentration of the chemical-containing solution to be contacted with the cells. The concentration of the chemical to be contacted with the cells can be determined by previously preparing a calibration curve by laser colorimetry and measuring the chemical-containing solution in the vicinity of the junction 6 by laser colorimetry.

Since the chemical concentration of the chemical-containing solution can thus be continuously increased even after contacting with the cells, the method is efficient without necessity for re-proliferation of the cells in the 3-pronged micro flow channel and subsequent re-injection of the solution containing a chemical at higher concentration. Accordingly, the threshold value of chemical resistance of the cells as the subject of measurement can be easily determined. Because the chemical concentration of the chemical-containing solution can thus be suitably changed, the solution containing a chemical at a varying concentration can be contacted with the same cells in one measurement system and can be sequentially examined. When the solution containing a chemical at a varying concentration is contacted with cells in one measurement system, a stepwise increase in the concentration of a chemical, starting from a solution containing the chemical at a lower concentration, is preferable for the accuracy of the concentration of the chemical-containing solution and from a cellular biological viewpoint.

The micro flow channel used in the assay method of the present invention is not limited to a micro flow channel having a 3-pronged junction, and may have a junction having 3 or more flow channels merged into one flow channel. In this case, the width of each flow channel is preferably the same. For example when the flow channels (A), (B) and (C) are merged into a flow channel (D), different kinds of cells can be proliferated in the flow channels (A), (B) and (C) respectively and then contacted with one another at the point of intersection of the flow channels (A), (B) and (C) to detect a signal generated upon interaction of these cells. The signal includes, but is not limited to, a ligand, a cytokine, a growth factor or a change in potential on a cell membrane.

### Examples

Hereinafter, the present invention is described by reference to the Examples, but the present invention is not limited to the Examples.

### Example 1

One hundred parts (parts by weight; this applies hereinafter) of 3,4-epoxycyclohexyl methyl-3,4-epoxy-cyclohexane carboxylate represented by the chemical formula 1, 125 parts of methylhexahydrophthalic anhydride represented by the chemical formula 2, 3.75 parts of tetra-n-butyl phosphonium o,o-diethyl phosphorodithioate, 2.25 parts of glycerin and 0.07 part of a silicone surfactant were mixed under stirring to prepare an epoxy resin solution.

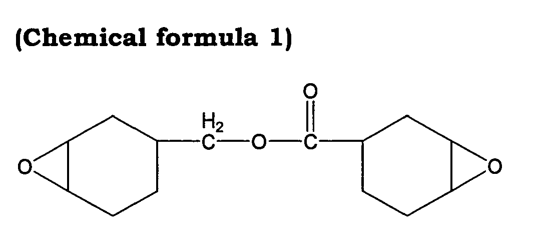

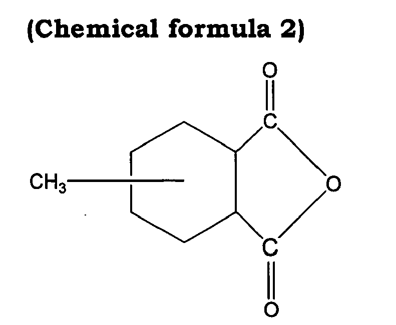

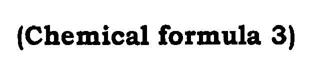

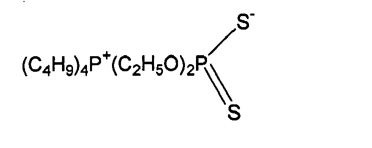

First, a 17 wt% solution of urethane acrylate represented by chemical formula 4 in toluene was applied onto a stainless steel endless belt by casting at a running speed of 0.3 m/min., and then air-dried to vaporize the toluene, and cured it by using a UV curing apparatus to form a hard coat layer of 2 µm in thickness. Then, the epoxy resin solution was applied through a die at 0.3 m/min. onto the hard coat layer by casting, and cured it by heating with a heating apparatus to form an epoxy resin layer of 400 µm in thickness.

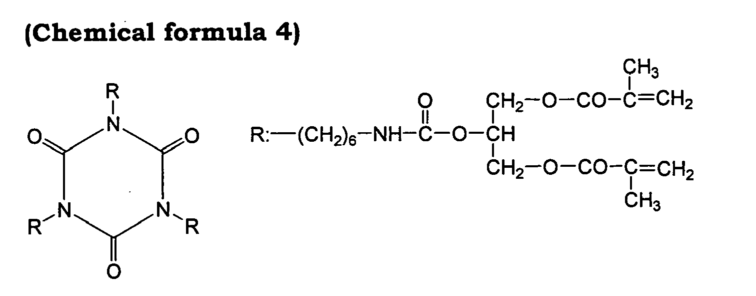

A laminate comprising the hard coat layer and the epoxy resin layer was removed from the endless belt and then subjected to post-curing by leaving it at 180°C for **1** hour on a glass plate in an atmosphere where the concentration of oxygen had been reduced to 0.5% by flushing with nitrogen. The laminate after curing was cut in dimensions of 25 mm in length and 75 mm in width, to give an epoxy substrate for cell microchip.

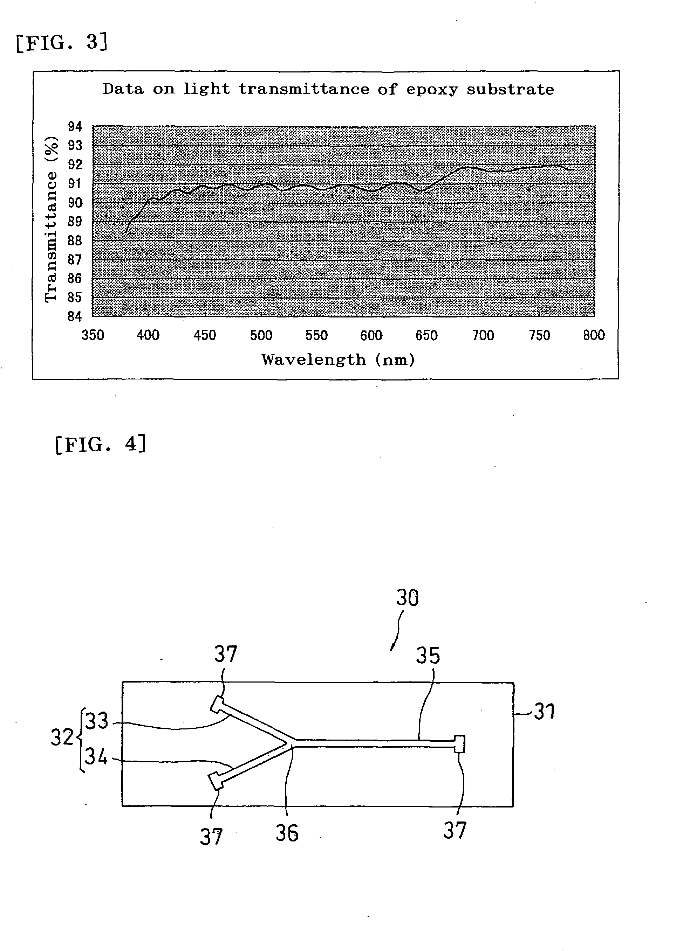

A chart of the light transmittance of this epoxy substrate, as measured in the side of the epoxy resin layer, is shown in Fig. 3. The surface roughness (Ra) prescribed under JIS B 0601 was 10 nm on the hard coat layer and 0.5 nm on the epoxy resin layer. With respect to the phase difference (Δnd) of the epoxy substrate, the in-plane phase difference was 0.5 nm, and the phase difference in thickness direction (Rth) was 20 nm.

Using a KrF excimer laser having a wavelength of 248 nm (manufactured by Lambda Physics, Inc.), a laser light was then focused with an angle of 50 µm and an intensity of 1.28 J/cm² on the surface of the epoxy resin layer and scanned once at a scanning speed of 120 µm/sec., whereby the epoxy resin layer was fabricated to have a micro flow channel as shown in Fig. 4, to give a cell microchip. The depth of the micro flow channel in this case was 30 µm, and the cross-section was trapezoidal. The haze value of the cell microchip was 0.5% in both the micro flow channel and the substrate.

### Example 2

A cell microchip was obtained by fabricating the micro flow channel shown in Fig. 4 in the same manner as in Example 1 except that in the step of fabricating the micro flow channel, a laser light from a KrF excimer laser having a wavelength of 248 nm (manufactured by Lambda Physics, Inc.) was focused with an angle of 50 µm and an intensity of 1.28 J/cm² on the surface of the epoxy resin layer and scanned twice at a scanning speed of 120 µm/sec. The depth of the micro flow channel in this case was 60 µm, and the cross-section was trapezoidal. The haze value of the cell microchip was 0.5% in both the micro flow channel and the substrate.

### Example 3

A cell microchip was obtained by fabricating a micro flow channel in the same manner as in Example 1 except that a laser light from a KrF excimer laser having a wavelength of 248 nm (manufactured by Lambda Physics, Inc.) was focused with an angle of 50 µm and an intensity of 1.28 J/cm² on the surface of the hard coat layer and scanned once at a scanning speed of 120 µm/sec. The depth of the micro flow channel in this case was 30 µm, and the cross-section was trapezoidal. The haze value of the cell microchip was 0.5% in both the micro flow channel and the substrate.

### Example 4

The cell microchip prepared in Example 1 was used to examine the action of δ-aminolevulinic acid (SALA) on rat breast cancer cell MTF7 according to a method described in Journal of Japan Society for Laser Surgery and Medicine, Vol. 17, No. 1, pp. 1-10 (1996).

MTF7 was provided by Dr. Stephan P. Tomasovic, M. D. Anderson Cancer Center, Texas State University, US. MTF7 was proliferated in an α-MEM medium (Sigma Corporation) supplemented with 10% fetal calf serum (FCS) in an incubator for cell culture (37°C in 5% CO₂ under humidity).

The cell microchip (Fig. 4) prepared in Example 1 was placed in a 90 mmφ Petri dish, and the flow channel (A) 33, flow channel (B) 34 and flow channel (C) 35 were filled with the above medium. Then, MTF7 was inoculated via a micropipette into a liquid reservoir 37 of the flow channel (A) 33, and the medium was added to the Petri dish until the cell microchip was covered with the medium. The MTF7 cells were proliferated linearly along the flow channel (A) 33 in the incubator, and culture was continued until the cells reached the 3-pronged junction 36.

Then, the cell microchip wherein the MTF7 cells had been proliferated was removed from the Petri dish, and the above medium was injected via a micro pump into the liquid reservoir 37 of the flow channel (A) 33, and while the above medium containing 5ALA (manufactured by Sigma Corporation) at various concentrations (25, 50, 100, 200 and 400 µg/ml) was injected into the liquid reservoir 37 of the flow channel (B) 34, the cells were observed under a fluorescence microscope equipped with the incubator. When the 3-pronged junction 36 was irradiated with an Ar ion laser at 488 nm (condition: 200 µW), emission of fluorescence was observed under a fluorescence microscope. The cells into which the 5ALA-containing medium had not been injected emitted no fluorescence.

When culture of the cells after irradiation with the laser was further continued and observed with time under a microscope, the cells emitting fluorescence terminated their growth and fell eventually into death, whereas the MTF7 cells proliferated in the 5ALA-free medium continued to proliferate along the flow channel (C) 35.

## Claims

1. A cell microchip comprising a plastic substrate which a micro flow channel is formed thereon.

2. The cell microchip according to claim 1, wherein a cross-section of the micro flow channel is rectangular, triangular, circular, oval or a cross-sectional shape thereof.

3. The cell microchip according to claim 2, wherein a long or short side or a diameter of the cross-section of the micro flow channel is 2 to 200 µm.

4. The cell microchip according to any one of claims 1 to 3, wherein the micro flow channel has one or more junctions.

5. The cell microchip according to claim 4, wherein the junction is a 3-pronged junction composed of a flow channel (A), a flow channel (B) and a flow channel (C).

6. The cell microchip according to any one of claims 1 to 5, wherein the micro flow channel constitutes one measurement system using cells, and multiple measurement systems are formed on the plastic substrate.

7. The cell microchip according to any one of claims 1 to 6, wherein the plastic substrate is formed from an epoxy resin.

8. The cell microchip according to any one of claims 1 to 7, which has a haze value of 10% or less.

9. The cell microchip according to any one of claims 1 to 8, which has a light transmittance of 88% or more.

10. A method of measurement using cells, which comprises using the cell microchip according to any one of claims 1 to 9.

11. A biological assay method, which comprises using the cell microchip according to any one of claims 1 to 9.

12. A method of assaying the action of a chemical on cells by using a cell microchip wherein a flow channel (A), a flow channel (B), a flow channel (C) into which the flow channels (A) and (B) are merged, and a micro flow channel having a 3-pronged junction composed of the three flow channels are formed on a plastic substrate, which comprises filling one of the flow channels (A) and (B) with a medium to allow cells to grow or live therein, and injecting a chemical-containing solution into the other to contact the chemical with the cells, wherein the flow channel (C) is a passage of the medium or solution or a zone for assaying the action of the chemical.

13. The method of assaying the action of a chemical according to claim 12, wherein the contact of the cells with the chemical is carried out at the 3-pronged junction.

14. The method of assaying the action of a chemical according to claim 12 or 13, wherein the cells, starting from one or more cells, grow or live linearly in a single layer in the flow channel (A) or (B) that is a flow channel for proliferating or surviving the cells.

15. The method of assaying the action of a chemical according to any one of claims 12 to 14, wherein the action of a chemical on cells is examined more than once by using a cell microchip having multiple micro flow channels formed on the plastic substrate.
